(19) **Europäisches Patentamt / European Patent Office / Office européen des brevets**

(11) **EP 4 228 023 A1**

(12) **EUROPEAN PATENT APPLICATION**
published in accordance with Art. 153(4) EPC

(43) Date of publication:
**16.08.2023 Bulletin 2023/33**

(21) Application number: **21880355.9**

(22) Date of filing: **28.09.2021**

(51) International Patent Classification (IPC):
*H01M 4/133* (2010.01)  *H01M 4/587* (2010.01)
*H01M 4/38* (2006.01)  *H01M 4/62* (2006.01)
*H01M 10/42* (2006.01)  *H01M 10/44* (2006.01)
*H01M 10/0562* (2010.01)  *H01M 10/052* (2010.01)
*H01M 4/04* (2006.01)

(52) Cooperative Patent Classification (CPC):
**H01M 10/0562; H01M 4/0445; H01M 4/133;
H01M 4/134; H01M 4/136; H01M 4/1393;
H01M 4/1395; H01M 4/1397; H01M 4/38;
H01M 4/42; H01M 4/5815; H01M 4/587;
H01M 10/052; H01M 10/44; H02J 7/007182;**

(Cont.)

(86) International application number:
**PCT/KR2021/013251**

(87) International publication number:
**WO 2022/080707 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2020 KR 20200131288
06.07.2021 KR 20210088642**

(71) Applicant: **Samsung Electronics Co., Ltd.
Suwon-si, Gyeonggi-do 16677 (KR)**

(72) Inventors:
• **SUGIMOTO, Toshinori**
  **Suwon-si Gyeonggi-do 16678 (KR)**
• **KU, Jun Hwan**
  **Suwon-si Gyeonggi-do 16678 (KR)**
• **KIM, Young Eal**
  **Suwon-si Gyeonggi-do 16678 (KR)**
• **CHANG, Won Seok**
  **Suwon-si Gyeonggi-do 16678 (KR)**

(74) Representative: **Elkington and Fife LLP
Prospect House
8 Pembroke Road
Sevenoaks, Kent TN13 1XR (GB)**

(54) **ALL-SOLID-STATE SECONDARY BATTERY, AND CHARGING METHOD THEREFOR**

(57) An all-solid secondary battery includes: a positive electrode including a positive electrode active material layer; a negative electrode including a negative electrode current collector and a negative electrode active material layer on the negative electrode current collector; and a solid electrolyte layer between the positive electrode active material layer and the negative electrode active material layer, wherein the negative electrode active material layer includes first particles including a carbon material, and second particles including a metallic material that does not alloy with lithium metal.

FIG. 1

EP 4 228 023 A1

(52) Cooperative Patent Classification (CPC): (Cont.)
H01M 2004/027; H01M 2010/4292;
H01M 2300/0045; H01M 2300/0068;
H01M 2300/0071; Y02E 60/10

**Description**

TECHNICAL FIELD

The present disclosure relates to all-solid secondary batteries and methods of charging the same.

BACKGROUND ART

Using lithium as a negative electrode active material may increase the energy density of an all-solid secondary battery including a solid electrolyte. For example, the specific capacity of lithium (capacity per unit mass) is about 10 times the specific capacity of graphite, which may be used as a negative electrode active material. Therefore, lithium may be used as a negative electrode active material to increase output while a solid secondary battery may be made thinner.

When lithium is used as a negative electrode active material, lithium (lithium metal) may be deposited on the negative electrode side during charge. As the charging and discharging of the all-solid secondary battery is repeated, the lithium deposited on the negative electrode side may grow through gaps of the solid electrolyte, for example, in a branched shape. Lithium grown in a branched shape may be referred to as a lithium dendrite, and the lithium dendrite may cause a short circuit in the solid secondary battery. Lithium dendrites may also cause capacity degradation.

DESCRIPTION OF EMBODIMENTS

TECHNICAL PROBLEM

Provided is an all-solid secondary battery using lithium as a negative electrode active material and having improved characteristics, and a method of charging the same.

Additional aspects may be presented in part in the following description, may become apparent from the description, or may be learned by practicing the presented embodiments.

SOLUTION TO PROBLEM

According to an aspect of an embodiment, an all-solid secondary battery includes: a positive electrode including a positive electrode active material layer; a negative electrode including a negative electrode current collector and a negative electrode active material layer on the negative electrode current collector; and a solid electrolyte layer between the positive electrode active material layer and the negative electrode active material layer, wherein the negative electrode active material layer may include first particles including a carbon material, and second particles including a metallic material that does not alloy with lithium metal.

A ratio of an initial charge capacity of the negative electrode active material layer to an initial charge capacity of the positive electrode active material layer may satisfy Equation 1:

$$\text{Equation 1}$$

$$0.01 < (b\,/\,a) < 1$$

wherein a is the initial charge capacity of the positive electrode active material layer determined from a first open circuit voltage to a maximum charging voltage versus Li/Li+, and b is the initial charge capacity of the negative electrode active material layer determined from a second open circuit voltage to 0.01 volts (V) versus Li/Li+.

The metallic material may include at least one of copper (Cu), titanium (Ti), nickel (Ni), cobalt (Co), boron (B), tungsten (W), iron (Fe), or an alloy thereof.

The average particle size of the first particles may be about 10 nanometers (nm) to about 1 micrometer ($\mu$m), and the average particle size of the second particles may be about 5 nm to about 100 nm.

A weight ratio of the metallic material to the carbon material may be about 1:1 to about 1:20.

The solid electrolyte layer may include at least one of a sulfide solid electrolyte, an oxide solid electrolyte, and a polymer electrolyte.

The solid electrolyte layer may include a sulfide solid electrolyte, and the negative electrode active material layer may further include a metal sulfide.

The metal sulfide may include at least one of copper sulfide (CuS), titanium sulfide ($TiS_2$), cobalt sulfide (CoS),

nickel sulfide (NiS), or zinc copper sulfide ($Cu_3ZnS_4$).

A content of the metal sulfide may be about 4 weight percent (wt%) to about 50 wt%, based on a total weight of the negative electrode active material layer.

The solid electrolyte layer may further include a binder or an ionic liquid.

The negative electrode active material layer may further include a lithium-alloying metal or a lithium-alloying semiconductor material.

The negative active material layer may further include a binder.

A content of the binder may be about 0.3 weight percent (wt%) to about 15 wt%, based on the total weight of the negative electrode active material layer.

The thickness of the negative electrode active material layer may be about 1 $\mu$m to about 20 $\mu$m.

The porosity of the negative electrode active material layer may be about 30 % to about 60 %.

The carbon material of the first particles may include at least one of carbon black, acetylene black, furnace black, Ketjen black, or graphene.

The negative electrode current collector, the negative electrode active material layer, and an area therebetween may be Li-free areas that do not include lithium (Li) in an initial state or a state after discharge of the all-solid secondary battery.

In the charged state of the all-solid secondary battery, a metal layer including lithium metal may be further included between the negative electrode current collector and the negative electrode active material layer.

The ratio of the initial charge capacity of the negative electrode active material layer to the initial charge capacity of the positive electrode active material layer may satisfy Equation 1A-.

## Equation 1A

$$0.01 < (b / a) < 0.5$$

The ratio of the initial charge capacity of the negative electrode active material layer to the initial charge capacity of the positive electrode active material layer may satisfy Equation 1 B:

## Equation 1B

$$0.01 < (b / a) < 0.1$$

According to an embodiment, a method of charging an all-solid secondary battery includes: charging the all-solid secondary battery to a voltage such that an initial charge capacity of the negative electrode active material layer during charge of the all-solid secondary battery is exceeded.

During the charging of the all-solid secondary battery, a metal layer including lithium metal may be formed between the negative electrode current collector and the negative electrode active material layer.

According to an embodiment, a method of operating the all-solid secondary battery of includes charging the all-solid secondary battery, wherein prior to the charging of the all-solid secondary battery, the negative electrode current collector, the negative electrode active material layer, and an area between the negative electrode current collector and the negative electrode active material layer do not include lithium metal.

According to an embodiment, a method of operating the all-solid secondary battery includes charging the all-solid secondary battery; and discharging the all-solid secondary battery, wherein the negative electrode current collector, the negative electrode active material layer, and an area between the negative electrode current collector and the negative electrode active material layer do not include lithium metal after the discharging of the all-solid secondary battery.

According to an embodiment, a method of manufacturing an all-solid secondary battery includes obtaining a positive electrode including a positive electrode active material layer; obtaining a negative electrode including a negative electrode current collector, and a negative electrode active material layer on the negative electrode current collector; and disposing a solid electrolyte layer between the positive electrode active material layer and the negative electrode active material layer, wherein the negative electrode active material layer includes first particles including a carbon material, and second particles including a metallic material that does not alloy with lithium metal.

According to an embodiment, an all-solid secondary battery includes a positive electrode; a negative electrode including a carbon material, and a metallic material including at least one of copper, titanium, nickel, cobalt, or an alloy thereof; and a solid electrolyte layer between the positive electrode and the negative electrode, the solid electrolyte layer including at least one of a sulfide or an oxide, wherein a weight ratio of the metallic material to the carbon material is about 1:1 to about 1:20, and wherein a thickness of the negative electrode active material layer is about 1 micrometer to about 20 micrometers.

ADVANTAGEOUS EFFECTS OF DISCLOSURE

An aspect of the present disclosure provides an all-solid secondary battery capable of solving the problems described herein, using lithium as a negative electrode active material, and having improved characteristics, and a method of charging the same.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional view of a schematic configuration of an embodiment of an all-solid secondary battery;
FIG. 2 is a cross-sectional view of an embodiment of a negative electrode of an all-solid secondary battery;
FIG. 3 is a cross-sectional view of a state when the all-solid secondary battery of FIG. 1 is in an overcharged state;
FIG. 4 is a cross-sectional view of an embodiment of a negative electrode of an all-solid secondary battery;
FIG. 5 is a graph of capacity retention (percent (%)) versus cycle number illustrating a result of measuring cycle characteristics of an all-solid secondary battery according to an embodiment;
FIG. 6 is a graph of capacity (milliampere hours per square centimeter ($mAh/cm^2$)) versus cycle number (n) illustrating results of measuring cycle characteristics of the all-solid-state secondary battery of Example 6 and Comparative Example 2; and
FIG. 7 is a graph of capacity retention (%) versus cycle number (n) illustrating results of measuring cycle characteristics of the all-solid-state secondary battery of Example 6 and Comparative Example 2.

MODE OF DISCLOSURE

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. "Or" means "and/or". Expressions such as "at least one of," when preceding a list of elements, modify the entire list of elements and do not modify the individual elements of the list.

Although terms such as "first" and "second" are used herein to describe various members, configurations, regions, layers and/or sections, they should not be limited to these terms. These terms are only used to distinguish one member, component, region, layer or section from another member, component, region, layer or section. Thus, a first member, configuration, region, layer, or section to be described below may be referred to as a second member, configuration, region, layer, or section without departing from the interchange of embodiments.

Spatially relative terms such as "back" may be used to conveniently describe the relationship of features with one member or other members or features illustrated in the drawings. Spatially relative terms will be understood to include other orientations of the device in use or operation in addition to the orientation shown in the drawings. Devices may be oriented differently (90 degrees or other orientation), and the spatially relative description used herein may be interpreted accordingly. In the drawings, some of the members may be omitted, but this omission is not intended to exclude the omitted components, but is merely intended to help understanding the features of the disclosure.

The terms used herein have been described only to describe specific embodiments, and are not intended to limit the embodiments. An expression used in the singular encompasses the expression of the plural, unless it has a clearly different meaning in the context. In this description, the terms "comprise", "have", and/or "configured to" specify the presence of the recited features, integers, steps, operations, members and/or configurations, and do not exclude the presence or addition of one or more features, integers, steps, operations, members, configurations and/or a group thereof.

As used herein, "about" means that the stated value is included and is within the allowable deviation range for a specific value determined by one of ordinary skill in the art considering the error associated with measuring a specific amount (e.g., limitations of the measurement system). For example, "about" may mean within one or more standard deviations or within $\pm 30$ %, $\pm 20$ %, $\pm 10$ %, or $\pm 5$ % of a specified value.

Unless expressly stated otherwise, all ranges used herein include endpoints, and the endpoints may be combined independently of each other (e.g., the "up to 25 wt% or, more specifically, 5 wt% to 20 wt%" range includes end points and all intermediate values in the "5 wt% to 25 wt%" range such as "10 wt% to 25 wt%" and "5 wt% to 15 wt%"). When "some embodiments", "embodiments", "other embodiments" and the like are mentioned throughout the specification, certain elements described in connection with the embodiments are included in at least one embodiment described herein, and in other embodiments, such elements may or may not be present. In addition, it should be understood that the mentioned members may be combined in any suitable manner in various embodiments. "Combination thereof" is an open expression and may include any combination including at least one of the listed configurations or equivalent configuration or feature not listed.

Exemplary embodiments are described with reference to a cross-sectional view which is a schematic illustration of ideal embodiments (and intermediate structures) of exemplary embodiments. Therefore, for example, variations are expected from the illustrated form as a result of manufacturing techniques and/or tolerances. Thus, the exemplary embodiments should not be construed as being limited to the specific shape of the region illustrated herein, but should include variations due to, for example, manufacturing. For example, an implanted area illustrated as a rectangle will typically have rounded or curved features and/or a gradient of implant concentration at its edge rather than a binary change from implanted to a non-implanted area. Likewise, a buried area formed by injection may cause some injection in an area between the buried area and a surface where the injection is made. Accordingly, the areas shown in the drawings are schematic in nature and their shapes are not intended to illustrate the actual shape of the area of the device and are not intended to limit the scope of the exemplary embodiments.

Unless otherwise defined, all terms used herein (including technical and scientific terms) have the same meaning as commonly understood by one of ordinary skill in the art to which the present disclosure belongs. It will be further understood that terms such as terms defined in commonly used dictionaries should be interpreted as having a meaning consistent with their meaning in the context of the related technology, and will not be interpreted in an ideal or overly formal meaning unless explicitly defined herein.

As used herein, a C-rate means a current which will discharge a battery in one hour, e.g., a C-rate for a battery having a discharge capacity of 1.6 ampere-hours would be 1.6 amperes.

Hereinafter, an all-solid secondary battery according to an embodiment and a method of charging the same will be described in detail with reference to the accompanying drawings. The width and thickness of layers or elements illustrated in the accompanying drawings may be somewhat exaggerated for convenience and clarity of description.

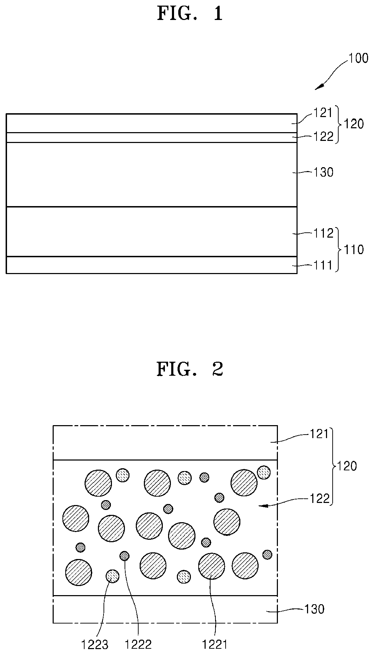

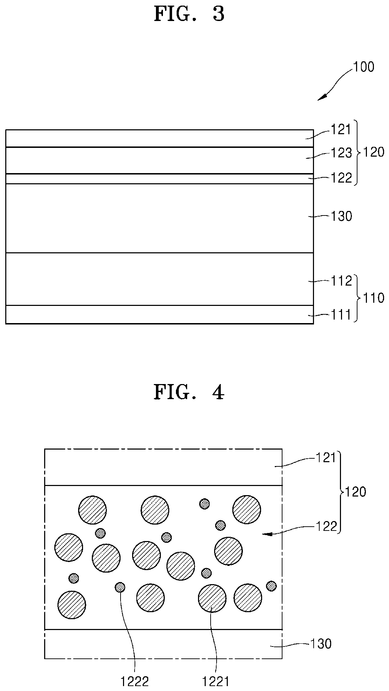

FIG. 1 is a cross-sectional view of a schematic configuration of an embodiment of an all-solid secondary battery 100. FIG. 2 is a cross-sectional view of an embodiment of a negative electrode of the all-solid secondary battery 100. FIG. 3 is a cross-sectional view of a state when the all-solid secondary battery 100 of FIG. 1 is in an overcharged state. FIG. 4 is a cross-sectional view of an embodiment of a negative electrode of the all-solid secondary battery 100 according to an embodiment.

Referring to FIG. 1, the all-solid secondary battery 100 according to an embodiment may include a positive electrode 110, a negative electrode 120, and a solid electrolyte layer 130 between the positive electrode 110 and the negative electrode 120.

Positive electrode

The positive electrode 110 may include a positive electrode active material layer 112. The positive electrode 110 may selectively include a positive electrode current collector 111 on the positive electrode active material layer 112.

The positive electrode current collector 111 may be in the form of a plate or a foil, and may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In an embodiment, the positive electrode current collector 111 may be omitted, and the positive electrode active material layer 112 may function as a current collector.

The positive electrode active material layer 112 may include a positive electrode active material and an electrolyte. The electrolyte may include a liquid electrolyte, a gel electrolyte, a solid electrolyte, or an ionic liquid, and the like. The solid electrolyte included in the positive electrode 110 may be similar to or different from the solid electrolyte included in the solid electrolyte layer 130. In an embodiment, a positive electrode active material includes a first solid electrolyte, the solid electrolyte layer 130 includes a second solid electrolyte, and the first solid electrolyte and the second solid electrolyte may be independently selected. Details of the solid electrolyte will be described in detail herein.

In an embodiment, the solid electrolyte may be included in the positive electrode active material layer 112 in an amount of about 1 wt% to about 50 wt%, for example, about 2 wt% to about 40 wt%, about 3 wt% to about 30 wt%, or about 4 wt% to about 20 wt%, based on the total weight of the positive electrode layer 112.

The positive electrode active material may be a positive electrode active material capable of reversibly incorporating, for example, incorporating and releasing, for example, separating lithium ions.

For example, the positive electrode active material may include at least one of a lithium metal oxide, lithium metal phosphate, a sulfide, or an oxide. The lithium metal oxide may include a lithium transition metal oxide, and may include, for example, at least one of lithium cobalt oxide (hereinafter referred to as LCO), lithium nickel oxide, lithium nickel cobalt oxide, lithium nickel cobalt aluminum oxide (hereinafter referred to as NCA), lithium nickel cobalt manganate (hereinafter referred to as NCM), or lithium manganate. An example of lithium phosphate is lithium iron phosphate. The sulfide may include at least one of nickel sulfide, copper sulfide, or lithium sulfide. The oxide may include at least one of iron oxide or vanadium oxide. Each of these positive electrode active materials may be used alone, or a combination of positive electrode active materials may be used.

In an embodiment, the positive electrode active material may include a lithium transition metal oxide having a layered rock-salt structure. The "layered rock-salt structure" may be a structure in which oxygen atomic layers and metal atomic layers are alternately arranged regularly in the <111 > direction of a cubic rock-salt structure, and as a result, each atomic layer forms a two-dimensional plane. The "cubic rock-salt structure" refers to a sodium chloride structure, which is a kind of crystal structure, and for example, refers to a structure in which face-centered cubic lattices respectively formed by positive and negative ions are shifted from each other by 1/2 of a unit cell dimension.

The lithium transition metal oxide having such a layered rock-salt structure may be, for example, at least one of $LiNi_xCo_yAl_zO_2$ ("NCA") (where 0<x<1, 0<y<1, 0<z<1, and x+y+z=1) or $LiNi_xCo_yMn_zO_2$ ("NCM") (however, 0<x<1, 0<y<1, and 0<z<1, while x + y + z = 1). The stoichiometric coefficients x, y and z may be independently selected for the lithium transition metal oxide.

When the positive electrode active material includes the lithium transition metal oxide having the layered rock-salt structure, energy density and thermal stability of the all-solid secondary battery 100 may be improved.

The positive electrode active material may be covered by a coating layer. The covering layer of the present embodiment may be a covering layer suitable for the positive electrode active material of the all-solid secondary battery 100. The coating layer may be, for example, $LiNbO_3$, $Li_4TiO_5O_{12}$, $Li_2O\text{-}ZrO_2$, lithium lanthanum zirconate, $Li_{7-3x}Al_xLa_3Zr_2O_{12}$ ($0 \le x \le 1$), or $Li_7La_3Zr_2O_{12}$. Details related to the coating layer may be determined by one of ordinary skill in the art without undue experimentation, and therefore, for clarity of description, are not further described herein.

In addition, the positive electrode active material may include a lithium transition metal oxide such as NCA or NCM. When the positive electrode active material includes Ni, the capacity of the all-solid secondary battery 100 is increased, so that metal elution of the positive electrode active material may be reduced in a charged state of the battery. Accordingly, long-term reliability and cycle characteristics in a charged state of the all-solid secondary battery 100 according to the present embodiment may be improved.

In an embodiment, the positive electrode active material may have any suitable shape, and may be in the form of a particle. For example, the particle may have a linear shape, a curved spherical shape, an elliptical spherical shape, or a combination shape thereof. In addition, the particle diameter of the positive electrode active material is not particularly limited, and may have an appropriate particle diameter for the positive electrode active material of the all-solid secondary battery 100. The particle diameter may be from about 500 nanometers (nm) to about 20 micrometers ($\mu$m), from about 1 micrometer to about 15 micrometers, or from about 5 micrometers to about 10 micrometers. Unless otherwise specified, the particle diameter is the D50 particle diameter and is determined by laser light scattering. The content of the positive electrode active material of the positive electrode 110 is not particularly limited, and the content suitable for the positive electrode of the all-solid secondary battery 100 may be used. The content of the positive electrode active material in the positive electrode may be about 50 wt% to about 99 wt %, about 60 wt% to about 95 wt %, or about 70 wt% to about 90 wt%, based on the total weight of the positive electrode. In addition, the positive electrode active material may be included in the positive electrode active material layer 112 in an amount of about 55 wt% to 99 wt %, about 65 wt% to about 97 wt%, or about 75 wt% to about 95 wt%, based on the total weight of the positive electrode active material layer 112.

In addition, the positive electrode 110 may be appropriately mixed with additives such as a conductive assistant, a binder, a filler, and a dispersant, as well as a positive electrode active material and a solid electrolyte. Examples of the conductive assistant may include graphite, carbon black, acetylene black, Ketjen black, carbon fiber, and metal powder. Combinations of conductive assistants may also be used. In addition, the conductive assistant may be included in any suitable amount, for example, from about 0.05 wt% to about 10 wt %, for example, about 0.08 wt% to about 8 wt %, about 0.1 wt% to about 6 wt %, or about 0.15 wt% to about 4 wt %, based on the total weight of the positive electrode. The conductive assistant may be included in an amount of about 0.05 wt% to about 10 wt%, for example, about 0.08 wt% to about 8 wt %, about 0.1 wt% to about 6 wt %, or about 0.15 wt% to about 4 wt %, based on the total weight of the positive electrode active material layer 112.

If desired, the positive electrode 110 may include a binder. The binder may include, for example, styrene butadiene rubber ("SBR"), polytetrafluoroethylene, polyvinylidene fluoride, polyethylene, and the like. Mixtures of binders may be used. In addition, the binder may be included in any suitable amount, for example, from about 0.1 wt% to about 10 wt %, for example, about 0.2 wt% to about 8 wt %, about 0.4 wt% to about 6 wt %, or about 0.8 wt% to about 4 wt %, based on the total weight of the positive electrode. The binder may be included in an amount of about 0.1 wt% to about 10 wt%, for example, about 0.2 wt% to about 8 wt %, about 0.4 wt% to about 6 wt %, or about 0.8 wt% to about 4 wt %, based on the total weight of the positive electrode active material layer 112.

Negative electrode

The negative electrode 120 may include a negative electrode current collector 121 and a negative electrode active material layer 122 on the negative electrode current collector 121.

The negative electrode current collector 121 may include a material that does not react with lithium, that is, does not alloy with lithium metal. Suitable materials for the negative electrode current collector 121 may include, for example, Cu, stainless steel, Ti, Fe, Co, and Ni. Combinations including one or more suitable materials may be used. The negative electrode current collector 121 may be composed of one type of metal, or may include an alloy of two or more types of metals or optionally a coating layer on the metal. The shape of the negative electrode current collector 121 is not specifically limited, and may be provided in a linear shape or a curved shape. The negative electrode current collector 121 may be formed, for example, in a plate shape or a thin shape. For example, the negative electrode current collector 121 may be provided in the shape of a clad foil.

The negative electrode active material layer 122 may include a first particle 1221 including a carbon-based material and a second particle 1222 including a metallic material that does not alloy with lithium metal (Li). The negative electrode active material layer 122 may be a mixed layer in which first particles 1221 and second particles 1222 are mixed.

The carbon-based material may be amorphous carbon. For example, the carbon-based material may include at least one of carbon black ("CB"), acetylene black ("AB"), furnace black ("FB"), Ketjen black ("KB"), or graphene.

The average particle diameter D50 (e.g., average particle diameter) of the first particles 1221 may be about 1 micrometer ($\mu$m) or less. The lower limit of the average particle diameter of the first particles 1221 may be about 10 nanometers (nm), but is not particularly limited thereto. The average particle diameter of the first particles 1221 may be about 10 nm to about 1 $\mu$m, for example, about 20 nm to about 500 nm, about 30 nm to about 200 nm, or about 40 nm to about 100 nm.

The metallic material may be a material that does not alloy with lithium metal. For example, the metallic material may include at least one of copper (Cu), titanium (Ti), nickel (Ni), cobalt (Co), boron (B), tungsten (W), Fe, or an alloy thereof. For example, Cu has excellent conductivity and is relatively inexpensive, and if Cu is used, cost competitiveness of a negative electrode may be improved.

The alloy may be at least one of a copper alloy, a titanium alloy, a nickel alloy, a cobalt alloy, a boron alloy, a tungsten alloy, or an iron alloy.

As an example, the copper alloy may be at least one of a copper-zinc alloy, a copper-aluminum alloy, and a copper-manganese alloy. An example of the copper-zinc alloy may be $Cu_6Zn_4$, an example of the copper-aluminum alloy may be CuAls, and an example of the copper-manganese alloy may be Manganin (Mn-Cu). As another example, the nickel alloy may be a nickel-chromium alloy. An example of the nickel-chromium alloy may be Nichrome (Ni-Cr).

The content of the metal that does not alloy with lithium metal may be about 60 atomic % to about 95 atomic %, for example, about 62 atomic % to about 93 atomic %, about 64 atomic % to about 91 atomic %, or about 68 atomic % to about 89 atomic %, based on the total alloy content. The content of copper may be about 60 atomic % to about 95 atomic %, for example, about 62 atomic % to about 93 atomic %, about 64 atomic % to about 91 atomic %, or about 68 atomic % to about 89 atomic %, based on the total content of the copper alloy. For example, the metallic material may not alloy with lithium metal under certain conditions. For example, the metallic material may be a material that does not form an alloy with lithium when a voltage of about 0 V to about 4.5 V is applied within a temperature range of about -40 °C to about 100 °C.

The second particle 1222 may be in the form of nano powder. The average particle diameter of the second particles 1222 may be less than the average particle diameter of the first particles 1221. For example, the average particle diameter D50 of the second particles 1222 may be about 100 nm or less. The lower limit of the average particle diameter of the second particles 1222 may be about 5 nm, but is not particularly limited thereto. The average particle diameter of the second particles 1222 may be about 5 nm to about 400 nm, for example, about 10 nm to about 300 nm, about 20 nm to about 200 nm , or about 30 nm to about 100 nm.

The second particle 1222 may be formed of the metallic material. For example, the second particle 1222 may comprise at least one of Cu, Ti, Ni, Co, B, W, or Fe.

The second particle 1222 may be an alloy including the metallic material. For example, the second particle 1222 may be formed of at least one of a Cu alloy, a Ti alloy, a Ni alloy, a Co alloy, a B alloy, a W alloy, or a Fe alloy.

For example, the second particle 1222 may be a copper alloy. For example, the second particle may be formed of at least one of a copper-zinc alloy, a copper-aluminum alloy, or a copper-manganese alloy. An example of the copper-zinc alloy may be $Cu_6Zn_4$, an example of the copper-aluminum alloy may be CuAls, and an example of the copper-manganese alloy may be Manganin (Mn-Cu). As another example, the second particle 1222 may be a nickel alloy. For example, the second particle 1222 may be formed of Nichrome (Ni-Cr).

A weight ratio of the metallic material that does not alloy with lithium metal to the total weight of the negative electrode active material layer 122 may be less than the weight ratio of the carbon-based active material to the total weight of the negative electrode active material layer 122. The weight ratio of the metallic material to the carbon-based material may be about 1:1 to about 1:20, about 1:1 to about 1:10, or about 1:2 to about 1:5.

In an embodiment, the carbon-based material may be present in an amount of about 50 wt% to about 95 wt %, about 60 wt% to about 85 wt %, or about 65 wt% to about 80 wt%, based on the total weight of the negative electrode active material layer 122. In an embodiment, a metallic material that does not alloy with lithium metal may be present in an amount of about 5 wt% to about 45 wt %, about 10 wt% to about 40 wt %, or about 15 wt% to about 30 wt%, based on the total weight of the negative electrode active material layer 122.

As described herein, as the negative electrode active material layer 122 includes a mixture in which the first particles 1221 of a carbon-based material and the second particles 1222 of a metallic material that does not alloy with lithium metal are mixed in an appropriate ratio, the conductivity of a negative electrode may be improved.

When the negative electrode active material layer 122 includes only amorphous carbon, for example, carbon black, the binding force between the negative electrode active material layer 122 and the negative electrode current collector 121 decreases, and sheet resistance of the negative electrode active material layer 122 may increase. When the sheet resistance of the negative electrode active material layer 122 increases, lithium may be mainly deposited between the negative electrode active material layer 122 and the solid electrolyte layer 130 during a charging process.

In contrast, in the all-solid secondary battery 100 according to an embodiment, the negative electrode active material layer 122 includes the second particle 1222 including a metallic material that does not alloy with lithium metal. The sheet resistance of the second particle 1222 may be less than the sheet resistance of the first particle 1221. Accordingly, the negative electrode active material layer 122 including the first particle 1221 and the second particle 1222 may have less sheet resistance than that of the negative electrode active material layer including only the first particle 1221.

For example, the sheet resistance of the negative electrode active material layer 122 may be about 4.0 milliohm-centimeter (m$\Omega\cdot$cm) or less. For example, the sheet resistance of the negative electrode active material layer 122 may be about 3.5 m$\Omega\cdot$cm or less. For example, the sheet resistance of the negative electrode active material layer 122 may be about 3.0 m$\Omega\cdot$cm or less. For example, the sheet resistance of the negative electrode active material layer 122 may be about 0.2 m$\Omega\cdot$cm or less. In an embodiment, the sheet resistance of the negative electrode active material layer 122 may be greater than 0 m$\Omega\cdot$cm, for example, about 0.01 m$\Omega\cdot$cm or greater, about 0.05 m$\Omega\cdot$cm or greater, or about 0.1 m$\Omega\cdot$cm or greater.

As the sheet resistance of the negative electrode active material layer 122 decreases, lithium may be mainly deposited between the negative electrode active material layer 122 and the negative electrode current collector 121 during a charging process. Accordingly, it may be possible to suppress the growth of lithium dendrites.

When the solid electrolyte layer 130 is a sulfide-based solid electrolyte, the negative electrode active material layer 122 may further include a third particle 1223 including a metal sulfide material comprising sulfur (S) in the sulfide of the solid electrolyte layer 130 and a metallic material. The metal sulfide material may include at least one of copper sulfide (CuS), titanium sulfide (TiS$_2$), cobalt sulfide (CoS), nickel sulfide (NiS), or zinc copper sulfide (Cu$_3$ZnS$_4$).

The metal sulfide material may have higher conductivity than that of the carbon-based material. The sheet resistance of the metal sulfide material may be less than that of the carbon-based material.

In the process of manufacturing the all-solid secondary battery 100, and in the process of contacting and pressing the negative electrode active material layer 122 and the solid electrolyte layer 130, the second particles 1222 of the negative electrode active material layer 122 and the sulfur of the solid electrolyte layer 130 may react to generate the third particle 1223. For example, when the second particle 1222 includes copper, the third particle 1223 may be copper sulfide. For example, when the second particle 1222 is titanium, the third particle 1223 may be titanium sulfide. For example, when the second particle 1222 is cobalt, the third particle 1223 may be cobalt sulfide.

The metal sulfide material may be about 4 wt% to about 50 wt%, based on the total weight of the negative electrode active material layer 122. In an embodiment, the metal sulfide material may be present in an amount of about 4 wt% to about 40 wt %, about 5 wt% to about 33 wt %, or about 10 wt% to about 25 wt%, based on the total weight of the negative electrode active material layer 122.

A ratio of the charge capacity of the negative electrode active material layer 122 and the charge capacity of the positive electrode active material layer 112, that is, the capacity ratio, may satisfy Equation 1:

## Equation 1

$$0.01 < (b/a) < 1$$

wherein a is the initial charge capacity of the positive electrode active material layer 112 determined from a first open circuit voltage to a maximum charging voltage (Vs. Li/Li+), and b is the initial charge capacity of the negative electrode active material layer 122 determined from a second open circuit voltage to 0.01 V (Vs. Li/Li+). The charging capacities a and b are determined by using an all-solid half-cell with a lithium counter electrode, and the initial charge capacity of the positive electrode is determined using the maximum charging voltage (Vs. Li/Li+) from the first open circuit voltage, and the negative electrode is determined using 0.01 V (Vs. Li/Li+) from the second open circuit voltage, respectively.

The maximum charging voltage of the positive electrode is determined by the positive electrode active material. In an embodiment, the maximum charging voltage of the positive electrode active material is determined by the maximum voltage in a cell including a positive electrode active material that satisfies the safety conditions described in Appendix A of the Japanese Standards Association of "Safety Requirements For Portable Sealed Secondary Cells, And For Batteries Made From Them, For Use In Portable Applications", JISC8712:2015. The entire content of JISC8712:2015 is incorporated herein by reference. According to an embodiment, a maximum charging voltage may be about 3 V to about 5 V, about 3.5 V to about 4.5 V, about 4 V to about 4.4 V, about 4.1 V to about 4.3 V, or about 4.2 V, or about 4.25 V. In an embodiment, for example, when the positive electrode active material is lithium cobalt oxide ("LCO"), NCA, or NCM, the maximum charging voltage may be about 4.1 V or about 4.2 V (Vs. Li/Li$^+$). In an embodiment, for example, when the positive electrode active material is lithium cobalt oxide ("LCO"), NCA, or NCM, the maximum charging voltage may be about 4.25 V (Vs. Li/Li$^+$).

In an embodiment, a ratio of the initial charge capacity of the negative electrode active material layer 122 and the initial charge capacity of the positive electrode active material satisfies Equation 1A:

$$\text{Equation 1A}$$
$$0.01<(b/a)<0.5$$

In an embodiment, a ratio of the initial charge capacity of the negative electrode active material layer 122 and the initial charge capacity of the positive electrode active material satisfies Equation 1B:

$$\text{Equation 1B}$$
$$0.01<(b/a)<0.1$$

As described in Equation 2, the charge capacity of the positive electrode active material layer 112 may be obtained by multiplying the charge specific capacity of the positive electrode active material and the mass of the positive electrode active material in the positive electrode active material layer 112.

$$\text{Equation 2}$$
$$Q = q \cdot m$$

wherein Q is the initial charge capacity (milliampere-hours (mAh)), q is the specific capacity of the active material (milliampere-hours per gram (mAh/g)), and m is the mass (grams (g)) of the active material.

When several types of positive electrode active materials are used, the initial charge capacity is determined, for example, by multiplying the specific capacity and the mass of each positive electrode active material based on the relative content of each positive electrode active material, and the sum of these values is used as the initial charge capacity of the positive electrode active material layer 112. The initial charge capacity of the negative electrode active material layer 122 is also calculated in the same way. That is, the initial charge capacity of the negative electrode active material layer 122 is obtained by multiplying the initial charge specific capacity of the negative electrode active material and the mass of the negative electrode active material in the negative electrode active material layer 122. When several types of negative electrode active materials are used, a value obtained by multiplying the charge specific capacity for each negative electrode active material by the mass is calculated, and the sum of these values is used as the initial charge capacity of the negative electrode active material layer 122.

The charge specific capacity of the positive electrode and negative electrode active material may be determined using an all-solid half-cell in which lithium metal is applied as a counter electrode. The initial charge capacity of each of the positive electrode active material layer 112 and the negative electrode active material layer 122 may be directly measured using an individual all-solid half-cell at a current density, for example, of about 0.1 milliamperes per square

centimeter ($mA/cm^2$). The positive electrode may be measured as an operating voltage (Vs. $Li/Li^+$) from a first open-circuit voltage ("OCV") to the maximum charging voltage, for example, of about 4.25 V. The negative electrode may be measured as the operating voltage (Vs. $Li/Li^+$) from the second open circuit voltage ("OCV") to about 0.01 V for the negative electrode. For example, an all-solid half-cell having the positive electrode active material layer 112 may be charged with a constant current density of about 0.1 $mA/cm^2$ from the first open circuit voltage to about 4.25 V, and an all-solid half-cell including the negative electrode active material layer 122 may be discharged with the constant current density of about 0.1 $mA/cm^2$ from the first open circuit voltage to about 0.01 V. In an embodiment, the all-solid half-cell having the positive electrode active material layer 112 is charged with a constant current density of about 0.5 $mA/cm^2$ from the first open circuit voltage to about 4.25 V, is charged until the current density reaches about 0.2 $mA/cm^2$ at the constant voltage of about 4.25 V, and is discharged until the constant current density of about 0.5 $mA/cm^2$ reaches about 2.0 V. For example, the positive electrode may be charged from the first open circuit voltage to about 3 V, from the first open circuit voltage to about 4 V, from the first open circuit voltage to about 4.1 V, from the first open circuit voltage to about 4.2 V, or from the first open circuit voltage to about 4 V. However, the maximum charging voltage or discharge bias for the positive electrode is not limited thereto. A maximum operating voltage of the positive electrode active material is determined by the maximum voltage in a battery that satisfies the safety conditions described in Appendix A of the Japanese Standards Association of "Safety Requirements For Portable Sealed Secondary Cells, And For Batteries Made From Them, For Use In Portable Applications", JISC8712:2015.

When the initial charge capacity is divided by the mass of each active material, the charging specific capacity is calculated. The charge capacity of each of the positive electrode active material layer 112 and the negative electrode active material layer 122 is an initial charge capacity measured during first charging. In an embodiment, the charge capacity of the positive electrode active material layer 112 is greater than the charge capacity of the negative electrode active material layer 122. In an embodiment, when the all-solid secondary battery 100 is charged, the all-solid secondary battery 100 is charged in excess of the charge capacity of the negative electrode active material layer 122. That is, the negative electrode active material layer 122 is overcharged. The term "overcharged" refers to a voltage greater than an open circuit voltage of a "fully-charged" battery or a half-cell, and is additionally defined in Appendix A of the Japanese Standards Association of "Safety Requirements For Portable Sealed Secondary Cells, And For Batteries Made From Them, For Use In Portable Applications", JISC8712: 2015. In the initial stage of charging, lithium is incorporated into the negative electrode active material layer 122. Here, "incorporated" means that the negative electrode active material layer 122 may intercalate or alloy lithium ions, or may form a compound with lithium (e.g., $CoO + 2Li^+ \rightarrow Li_2O + Co$). That is, a negative electrode active material may form an alloy or compound with lithium ions transferred from the positive electrode 110. When charging is performed in excess of the initial charge capacity of the negative electrode active material layer 122, as shown in FIG. 2, lithium may be deposited on the back side of the negative electrode active material layer 122, for example, between the negative electrode current collector 121 and the negative electrode active material layer 122, and a metal layer 123 may be formed by this lithium. The metal layer 123 may be mainly composed of lithium metal.

During discharge, lithium in the negative electrode active material layer 122 and the metal layer 123 may be ionized and move toward the positive electrode 110. Accordingly, lithium may be used as the negative electrode active material in the all-solid secondary battery 100. The negative electrode active material layer 122 may cover the metal layer 123, and the negative electrode active material layer 122 may serve as a protective layer for the metal layer 123 and may suppress precipitation growth of dendrites. A short-circuit of the all-solid secondary battery 100 may be suppressed, a capacity of the all-solid secondary battery 100 may be decreased, and characteristics of the all-solid secondary battery 100 may be improved.

In an example, the capacity ratio (e.g., b/a disclosed herein) is greater than 0.01. When the capacity ratio is 0.01 or less, characteristics of the all-solid secondary battery 100 may be deteriorated. Without wishing to be bound by theory, it is understood that when the capacity ratio is 0.01 or less, characteristics of the all-solid secondary battery 100 may be deteriorated because the negative electrode active material layer 122 may not function sufficiently as a protective layer. For example, when the thickness of the negative electrode active material layer 122 is very thin, the capacity ratio may be 0.01 or less. In this case, the negative electrode active material layer 122 may collapse due to repeated charging and discharging, and dendrites may be precipitated and grown. As a result, characteristics of the all-solid secondary battery 100 may be deteriorated.

In addition to the first particle 1221, the second particle 1222, and the third particle 1223, the negative electrode active material layer 122 may further include a metal or a semiconductor material that functions as a negative electrode active material forming an alloy or compound with lithium. For example, the anode active material layer 122 may include a metal or a semiconductor material that forms an alloy or compound with lithium (also referred to herein as "lithium-alloying") together with the first particle 1221 including a carbon-based material and the second particle 1222 including a metal-based material that does not alloy with lithium metal. In this case, the negative electrode active material of the negative electrode active material layer 122 includes first particles 1221 and the metal or the semiconductor material.

The metal or semiconductor material may include, for example, at least one of gold (Au), platinum (Pt), palladium (Pd), silicon (Si), silver (Ag), aluminum (Al), bismuth (Bi), tin (Sn), or zinc (Zn). The metal or semiconductor may be mixed with the negative electrode active material layer 122 in the form of particles. However, the metal or semiconductor material is an optional configuration and may be omitted.

In an embodiment, the negative electrode active material layer 122 may further include a binder. The binder may include, for example, styrene butadiene rubber ("SBR"), polytetrafluoroethylene, polyvinylidene fluoride, or polyethylene. The binder may be composed of one type, or may be composed of two or more types.

The negative electrode active material layer 122 may be stabilized on the negative electrode current collector 121 by including the binder in the negative electrode active material layer 122. For example, when the negative electrode active material layer 122 does not include a binder, the negative electrode active material layer 122 may be easily separated from the negative electrode current collector 121. A short circuit may occur if the negative electrode current collector 121 is exposed at a portion where the negative electrode active material layer 122 is separated from the negative electrode current collector 121. As will be described in more detail herein, the negative electrode active material layer 122 may be prepared by applying a slurry in which a material constituting the negative electrode active material layer 122 is dispersed on the negative electrode current collector 121 and drying the slurry. By including a binder in the negative electrode active material layer 122, the negative electrode active material may be stably dispersed in the slurry. As a result, for example, when the slurry is applied on the negative electrode current collector 121 by a screen printing method, clogging of the screen may be suppressed (e.g., clogging by aggregates of the negative electrode active material).

In an embodiment, when a binder is included in the negative electrode active material layer 122, the content of the binder may be about 0.3 wt% to about 15 wt% based on the total weight of the negative electrode active material layer 122. When the content of the binder is less than 0.3 wt%, the strength of the negative electrode active material layer 122 or the adhesion of the negative electrode active material layer 122 to the negative electrode current collector 121 is insufficient, so that characteristics of the negative electrode active material layer 122 are degraded and difficult to process/handle. When the content of the binder exceeds 15 wt %, characteristics of the all-solid secondary battery 100 may be deteriorated. In an embodiment, the lower limit of the content of the binder may be about 3 wt%, based on the total weight of the negative electrode active material layer 122. In an embodiment, a binder that may be included in the negative electrode active material layer 122 may be about 3 wt% to about 15 wt%, based on the total weight of the negative electrode active material layer 122. In an embodiment, a binder may be included in the negative electrode active material layer 122 in an amount of about 3.5 wt% to about 13 wt%, about 4 wt% to about 11 wt%, or about 4.5 wt% to about 9 wt%, based on the total weight of the negative electrode active material layer 122.

The thickness of the negative electrode active material layer 122 is not particularly limited and may be about 1 $\mu$m to about 20 $\mu$m, for example, about 2 $\mu$m to about 19 $\mu$m, about 3 $\mu$m to about 18 $\mu$m, or about 4 $\mu$m to about 17 $\mu$m. When the thickness of the negative electrode active material layer 122 is less than 1 $\mu$m, the characteristics of the all-solid secondary battery 100 may not be sufficiently improved. When the thickness of the negative electrode active material layer 122 exceeds 20 $\mu$m, sheet resistance of the negative electrode active material layer 122 is high, and the characteristics of the all-solid secondary battery 100 may not be sufficiently improved. When the aforementioned binder is used, the thickness of the negative electrode active material layer 122 may be secured to an appropriate level, e.g., an appropriate thickness of the negative electrode active material layer 122 may be provided.

In an embodiment, the all-solid secondary battery 100 may further include an additive in the negative electrode active material layer 122. The additive of the negative electrode active material layer 122 may include a filler, a dispersant, or an ion conductive agent.

The porosity of the negative electrode active material layer 122 may be about 30% to about 60%, for example, about 32% to about 58%, about 34% to about 56%, or about 36% to about 54%.

In an embodiment, an example in which the negative electrode active material layer 122 includes the first particle 1221, the second particle 1222, and the third particle 1223 has been described, but is not limited thereto. For example, as shown in FIG. 4, the negative electrode active material layer 122 may include the first particle 1221 and the second particle 1222 and may not include the third particle 1223.

Solid electrolyte layer

The solid electrolyte layer 130 includes a solid electrolyte formed between the positive electrode 110 and the negative electrode 120. The solid electrolyte may be at least one of a sulfide-based solid electrolyte, an oxide-based solid electrolyte, or a polymer electrolyte.

The solid electrolyte may include, for example, a sulfide-based solid electrolyte material. The sulfide-based solid electrolyte material may include, for example, $Li_2S$-$P_2S_5$, $Li_2S$-$P_2S_5$-LiX (X is a halogen element, for example I, Cl, Br, or F), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z is Ge, Zn, or Ga), $Li_2S$-$GeS_2$, $Li_2S$-$SiS_2$-$Li_3PO_4$, LiCl-$Li_2S$-$Li_3PS_4$, $Li_2S$-$SiS_2$-$Li_PMO_q$ (p and q are positive numbers, and M is P, Si, Ge, B, Al, Ga, or In), or an argyrodite-based material, such as $Li_6PS_5X$ (X is at least one halogen element). The sulfide-based solid electrolyte material may be produced by processing a starting material (e.g., $Li_2S$, and $P_2S_5$) by a melt quenching method or a mechanical milling method. In addition, after such treatment, heat treatment may be performed. The solid electrolyte may be amorphous, may be crystalline, or may be in a mixed state.

In an embodiment, the sulfide-based solid electrolyte material as a solid electrolyte may include sulfur (S), phosphorus (P), and lithium (Li) as constituent elements. In an embodiment, a material including $Li_2S$-$Li_3PS_4$ may be used. However, this is exemplary, and the materials may vary.

The solid electrolyte may be, for example, an oxide-based solid electrolyte. The oxide-based solid electrolyte may be at least one of $Li_{1+x+y}Al_xTi_{2-x}Si_yP_{3-y}O_{12}$ ($0<x<2$ and $0{\leq}y<3$), $BaTiO_3$, $Pb(Zr_aTi_{1-a})O_3$ ("PZT" wherein $0<a<1$), $Pb_{1-x}La_xZr_{1-y}Ti_yO_3$ ("PLZT") ($0{\leq}x<1$, and $0{\leq}y<1$), $Pb(Mg_3Nb_{2/3})O_3$-$PbTiO_3$ ("PMN-PT"), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al_aGa_{1-a})_x(Ti_bGe_{1-b})_{2-x}Si_yP_{3-y}O_{12}$ ($0<a<1$, $0<b<1$, $0{\leq}x{\leq}1$, and $0{\leq}y{\leq}1$), $Li_xLa_yTiO_3$ ($0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, or $Li_{3+x}La_3M_2O_{12}$ (M=Te, Nb, or Zr, and x is an integer of 1 to 10). The solid electrolyte is produced by a sintering method or the like.

The oxide-based solid electrolyte may be, for example, a garnet-type solid electrolyte such as $Li_7La_3Zr_2O_{12}$ ("LLZO") or $Li_{3+x}La_3Zr_{2-a}M_aO_{12}$ (M doped LLZO, M=Ga, W, Nb, Ta, or Al, and x is an integer from 1 to 10).

The solid electrolyte layer 130 may further include a binder or an ionic liquid.

The binder included in the solid electrolyte layer 130 may be, for example, styrene butadiene rubber ("SBR"), polytetrafluoroethylene, polyvinylidene fluoride, polyethylene, acrylic resin, etc. The binder of the solid electrolyte layer 130 may be the same as or different from that of the positive electrode active material layer 112 and the negative electrode active material layer 122.

Any suitable ionic liquid for preparing an electrolyte may be used.

A cation of the ionic liquid may include, for example, at least one of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, sulfonium-based cation, or a triazole-based cation, but are not necessarily limited thereto.

A anion of the ionic liquid may include, for example, at least one of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, or $(O(CF_3)_2C_2(CF_3)_2O)_2PO^-$, but are not limited thereto.

The solid electrolyte may be a polyelectrolyte. For example, as the polyelectrolyte, a polyethylene derivative, a polyethylene oxide derivative, a polypropylene oxide derivative, a phosphoric acid ester polymer, poly-agitation lysine, polyester sulfide, polyvinyl alcohol, polyvinylidene fluoride, or a polymer containing an ionic dissociation group.

Method of charging all-solid secondary battery

A method of charging the all-solid secondary battery 100 will be described. In an embodiment, the all-solid secondary battery 100 is charged in excess of the initial charge capacity of the negative electrode active material layer 122. That is, the negative electrode active material layer 122 is overcharged. Lithium is incorporated in the negative electrode active material layer 122 at the beginning of charging. Without being bound by theory, when lithium electrochemically reacts at the interface between the negative electrode active material layer 122 and the solid electrolyte layer 130, the negative electrode active material layer 122 may be overcharged. The reacted lithium is dispersed into negative electrode active material particles, and when overcharged, lithium atoms may precipitate in or adjacent to a current collector. When charging is performed in excess of the initial charge capacity of the negative electrode active material layer 122, as shown in FIG. 3, lithium is deposited on the back side of the negative electrode active material layer 122, that is, between the negative electrode current collector 121 and the negative electrode active material layer 122, and the metal layer 123 is formed by lithium precipitation. During discharge, lithium in the negative electrode active material layer 122 and the metal layer 123 is ionized and moves toward the positive electrode 110.

The negative electrode active material layer 122 may incorporate, for example, intercalate or allocate lithium ions, or may separate, for example, deintercalate or deallocate lithium ions. Accordingly, lithium may be used as a negative electrode active material in the all-solid secondary battery 100. The negative electrode active material layer 122 may cover the metal layer 123, and the negative electrode active material layer 122 may serve as a protective layer for the metal layer 123 and suppress precipitation or growth of dendrites. Suppression of precipitation or growth of dendrites may help prevent a short-circuit of the all-solid secondary battery 100 and a decrease in a capacity of the all-solid secondary battery 100 and may further improve characteristics of the all-solid secondary battery 100. Further, the metal layer 123 may not be formed in advance, and the manufacturing cost of the all-solid secondary battery 100 may be reduced. The negative electrode current collector 121, the negative electrode active material layer 122, and an area (interface) therebetween may be a Li-free area that does not include Li in an initial state of the all-solid secondary battery 100 or a state after discharge.

Hereinafter, the present disclosure will be described in more detail with reference to the following examples and comparative examples. However, the following examples are merely presented to exemplify the present invention, and the scope of the present invention is not limited thereto.

Examples

Example 1

In Example 1, the all-solid secondary battery 100 is manufactured by the following process.

Manufacturing of positive electrode

$LiNi_{0.9}Co_{0.07}Mn_{0.03}O_2$ ("NCM") is prepared as a positive electrode active material. As a solid electrolyte, $LiCl$-$Li_2S$-$Li_3PS_4$, an argyrodite-type crystal having an average primary particle diameter D50 of about 3.0 micrometers ($\mu$m), is prepared. In addition, polytetrafluoroethylene is prepared as a binder. In addition, carbon nanofibers are prepared as a conductive assistant. Subsequently, these materials are mixed in a weight ratio of positive electrode active material: solid electrolyte: conductive assistant:: binder = 83.8: 14.8: 0.2: 1.2, and the mixture is molded into a sheet, and cut into a square having a length of about 17 millimeters (mm) to prepare a positive electrode sheet. Further, this positive electrode sheet is pressed onto a positive electrode current collector of aluminum foil to produce a positive electrode.

Manufacturing of negative electrode

Stainless steel ("SUS") is prepared as a negative electrode current collector. In the negative electrode active material layer 122, as a carbon-based material, the first particles 1221 including carbon black ("CB") having an average particle diameter D50 of about 80 nanometers (nm) and the second particle 1222 including copper in the form of nano powders having an average particle diameter of about 100 nm are prepared. A mixed powder obtained by mixing the first particles 1221 and the second particles 1222 at a weight ratio of about 3:1 is used. The carbon black is an amorphous carbon material.

The negative electrode 120 is prepared as follows. First, 4 grams (g) of a negative electrode active material in the form of a mixed powder is put into a container, and 20 g of an N-methyl-pyrrolidone ("NMP") solution including a polyvinylidene fluoride binder is added thereto. Subsequently, a negative electrode slurry is prepared by stirring the mixed solution while slowly adding the NMP solution to the mixed solution. The NMP solution is added until the viscosity of the negative electrode slurry becomes a state suitable for film formation by a blade coater. This negative electrode slurry is applied to a stainless steel foil using the blade coater, and is dried in air at 80 °C for 20 minutes. A stack thus obtained is further dried at 100 °C for 12 hours in a vacuum state.

The stack is molded into a sheet form including a mixture mixed in a weight ratio of carbon black: copper: binder = 70.1: 23.4: 6.5 and cut into a square having a length of about 20 mm to prepare a negative electrode sheet.

The initial charge capacity of the negative electrode active material layer 122 with respect to the initial charge capacity of the positive electrode active material layer 112 satisfies Equation 1B:

$$\text{Equation 1B}$$

$$0.01 < (b/a) < 0.1$$

wherein a is the initial charge capacity of a positive electrode determined from a first open circuit voltage to a maximum charging voltage of 4.25 volts (V) (Vs. Li/Li+), and b is the initial charge capacity of a negative electrode determined from a second open circuit voltage to 0.01 V (Vs. Li/Li+). In Example 1, b/a of Equation 1B satisfies Equation 1B, and is about 0.066.

Preparation of solid electrolyte layer

The solid electrolyte layer 130 is formed by the following process.

To the $LiCl$-$Li_2S$-$Li_3PS_4$ solid electrolyte, an acrylic binder is added to form a mixture including 1.5% by weight of the binder, based on the weight of the mixture. A slurry is prepared by stirring while adding xylene and diethylbenzene to the mixture. This slurry is applied on a nonwoven fabric using a blade coater, and dried in air at a temperature of 40 °C. A stack thus obtained is vacuum-dried at 40 °C for 12 hours, and cut into a square of about 21 mm in length.

Manufacture of all-solid secondary battery

The positive electrode 110, the solid electrolyte layer 130, and the negative electrode 120 are sequentially stacked and sealed in a laminate film in a vacuum to prepare the all-solid secondary battery 100. Here, each portion of a positive electrode current collector and a negative electrode current collector is protruded out of the laminate film so as not to break the vacuum of the battery. These protrusions are used as positive and negative electrode terminals. Further, the all-solid secondary battery 100 is subjected to hydrostatic pressure treatment at 85 °C and 500 megapascals (MPa) for 30 minutes. The cell capacity of the all-solid secondary battery 100 is 18 milliampere-hours (mAh). By performing such hydrostatic treatment, the characteristics as a battery are greatly improved. After this treatment, the all-solid battery is sandwiched between two 1 cm thick stainless steel plates, and maintained under pressure at 4 MPa using 4 screws during a charge/discharge test.

Charge/discharge test

Charge/discharge characteristics of the thus produced all-solid secondary battery 100 are evaluated by the following charge/discharge test. Charge is evaluated by a constant current/constant voltage test method, and discharge is evaluated by a constant current test method.

A rate test of the charge/discharge test is performed by putting the all-solid secondary battery 100 in a 45 °C thermostat. In a first cycle, the all-solid secondary battery 100 is charged at a constant current density of 0.1 C (0.62 milliamperes per square centimeter ($mA/cm^2$)) until a battery voltage reaches 4.25 V, and a 4.25 V constant voltage is charged until the current reaches 0.05 C (0.31 $mA/cm^2$). Thereafter, the all-solid secondary battery 100 is left for 10 minutes at a first open-circuit voltage.

When the secondary battery 100 is charged at a constant current density of 0.1 C (0.62 $mA/cm^2$) and a constant voltage of 4.25 V is charged until the current reaches 0.05 C (0.31 $mA/cm^2$), an open-circuit voltage V1 is 4.22 V, and a difference between a charging voltage and the open-circuit voltage is 26 millivolts (mV).

Thereafter, discharge is performed at a constant current density of 0.1 C (0.62 $mA/cm^2$) until the battery voltage becomes 2.5 V.

In charging of a second cycle, constant current density and constant voltage charging are performed under the same conditions as those of the first cycle. Discharge in the second cycle is performed at a constant current density of 1.0 C (6.2 $mA/cm^2$) until it becomes 2.5 V. The discharge of the second cycle proceeds at a current value 10 times faster than the discharge of the first cycle.

When the negative electrode active material layer 122 includes copper and carbon black at 1:3, the sheet resistance is 2.72 milliohm-centimeters (mΩ·cm), the charge specific capacity in the first cycle is 223.4 milliampere-hours per gram (mAh/g), and the discharge specific capacity is 198.1 mAh/g. The discharge specific capacity in the second cycle is 161.4 mAh/g.

A ratio of the discharge specific capacity of the second cycle having a large C-rate to the discharge specific capacity of the first cycle having a small C-rate is 81.5%.

In a cycle test of the charge/discharge test, the all-solid secondary battery 100 is charged at a constant current density of 0.33 C (2.05 $mA/cm^2$) until the battery voltage reaches 4.25 V, and is charged at a constant voltage of 4.25 V until the current becomes 0.1 C (0.62 $mA/cm^2$).

Thereafter, discharge is performed at the constant current density of 0.33 C (2.05 $mA/cm^2$) until the battery voltage becomes 2.5 V. In Example 1, an open-circuit voltage V2 is 4.20 V, and a difference between the charging voltage and the open-circuit voltage is 54 mV.

From the second cycle to the 50th cycle, charging and discharging are performed under the same conditions as in the first cycle.

Comparative Example 1

In the present embodiment, a sheet including carbon black without copper as a negative electrode active material is prepared. An all-solid secondary battery is produced and tested in the same manner as in Example 1, except that this negative electrode active material is used.

In Comparative Example 1, the sheet resistance is 4.09 mΩ·cm, the charge specific capacity in the first cycle is 216.8 mAh/g, and the discharge specific capacity is 186.3 mAh/g. The discharge specific capacity in the second cycle is 96.7 mAh/g.

A ratio of the discharge specific capacity of the second cycle having a large C-rate to the discharge specific capacity of the first cycle having a small C-rate is 51.9 %.

Table 1 shows the resistance according to the material of the negative electrode active material layer 122 and the corresponding charge/discharge efficiency. Measured charge/discharge characteristics and the results are summarized in Table 1.

Table 1

| | | EXAMPLE 1 | EXAMPLE 2 | EXAMPLE 3 | EXAMPLE 4 | EXAMPLE 5 | COMPARATIVE EXAMPLE 1 |
|---|---|---|---|---|---|---|---|
| NEGATIVE ELECTRODE ACTIVE MATERIAL | | Cu: Carbon black = 1:3 | $Cu_6Zn_4$ : Carbon black = 1:3 | Ti: Carbon black = 1:3 | Ni: Carbon black = 1 : 3 | Co : Carbon black = 1:3 | Carbon black |
| COMPOSITION OF NEGATIVE ELECTRODE ACTIVE MATERIAL | | Cu, Carbon black, CuS | $Cu_8Zn_4$, Carbon black, $Cu_8ZnS_4$ | Ti, Carbon black, $TiS_2$ | Ni, Carbon black, NiS | Co, Carbon black, $CoS_2$ | Carbon black |
| TYPE AND CONTENT OF METAL SULFIDE | | CuS 10 WEIGHT% | $Cu_3ZnS_4$, 10 WEIGHT% | $TiS_2$ 10 WEIGHT% | NiS 10 WEIGHT% | $CoS_2$ 10 WEIGHT% | |
| Sheet resistance | $m\Omega$ cm | 2.72 | 3.25 | 0.18 | 0.08 | 0.20 | 4.09 |
| 1st : 0.1C Charge capacity | mAh/g | 223.4 | 222.9 | 220.2 | 224.8 | 225.5 | 216.8 |
| 0.1C Charge OCV [$V_1$] | V | 4.22 | 4.22 | 4.22 | 4.23 | 4.23 | 4.23 |
| Charge Voltage - OCV [$V_1$] | $\Delta$mV | 26 | 26 | 31 | 20 | 21 | 18 |
| 1st : 0.1C Discharge capacity | mAh/g | 198.1 | 194.0 | 186.4 | 204.8 | 206.6 | 186.3 |
| C-D Coulombic efficiency | % | 88.7 | 87.0 | 84.7 | 91.1 | 91.6 | 85.9 |
| b/a | - | 0.066 | 0.089 | 0.063 | 0.063 | 0.062 | 0.105 |
| 1.0C Discharge capacity | mAh/g | 161.4 | 152.9 | 153.1 | 181.9 | 178.7 | 96.7 |
| Q1.0C / Q0.1C | % | 81.5 | 78.8 | 69.5 | 80.9 | 79.2 | 51.9 |
| 0.33C Charge OCV [$V_2$] | V | 4.20 | 4.19 | 4.20 | 4.20 | 4.20 | 3.90 |
| Charge Voltage - OCV [$V_2$] | $\Delta$mV | 54 | 59 | 53 | 46 | 48 | 353 |
| * OCV = open-circuit voltage | | | | | | | |

Examples 2 to 5

Change of the material of the second particle 1222

The all-solid secondary battery 100 is manufactured in the same manner as in Example 1 except that the negative electrode active material layer 122 is manufactured using zinc copper ($Cu_6Zn_4$), titanium, nickel, and cobalt instead of copper as the second particle 1222, and a charge/discharge test is conducted in the same manner.

Referring to Table 1, in Example 2, the sheet resistance is 3.25 mΩ·cm when the negative electrode active material layer 122 includes zinc copper ($Cu_6Zn_4$) and carbon black at 1:3, and a ratio of the discharge specific capacity of the second cycle having a large C-rate to the discharge specific capacity of the first cycle having a small C-rate is 78.8 %. In Example 2, b/a of Equation 1A satisfies Equation 1A, and is about 0.089.

Referring to Table 1, in Example 3, the sheet resistance is 0.18 mΩ·cm when the negative electrode active material layer 122 includes titanium and carbon black at 1:3, and a ratio of the discharge specific capacity of the second cycle having a large C-rate to the discharge specific capacity of the first cycle having a small C-rate is 69.5 %. In Example 3, b/a of Equation 1B satisfies Equation 1B, and is about 0.063.

Referring to Table 1, in Example 4, the sheet resistance is 0.08 mΩ·cm when the negative electrode active material layer 122 includes nickel and carbon black at 1:3, and a ratio of the discharge specific capacity of the second cycle having a large C-rate to the discharge specific capacity of the first cycle having a small C-rate is 80.9 %. In Example 4, b/a of Equation 1B satisfies Equation 1B, and is about 0.063.

Referring to Table 1, in Example 5, the sheet resistance is 0.20 mΩ·cm when the negative electrode active material layer 122 includes cobalt and carbon black at 1:3, and a ratio of the discharge specific capacity of the second cycle having a large C-rate to the discharge specific capacity of the first cycle having a small C-rate is 79.2 %. In Example 5, b/a of Equation 1B satisfies Equation 1B, and is about 0.062.

According to the rate test of the charge/discharge test of the all-solid secondary battery 100 of Examples 1 to 5 and Comparative Example 1, the negative electrode active material layer 122 including the first particle 1221 and the second particle 1222 has a reduced sheet resistance compared to the negative electrode active material layer of Comparative Example 1 including the first particle 1221 including a carbon-based material without including the second particle 1222. In the all-solid secondary battery 100 including the negative electrode active material layer 122 according to an embodiment, the charge specific capacity and the discharge specific capacity are generally increased compared to the all-solid secondary battery including the negative electrode active material layer of Comparative Example 1, and for example, it can be seen that even if the C-rate is changed, a ratio of the discharge specific capacity (Q1.0 C/Q0.1 C) has been maintained over 69 %.

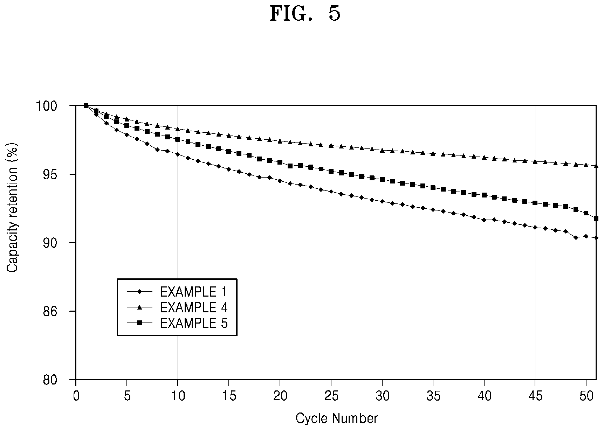

FIG. 5 is a graph illustrating a result of measuring cycle characteristics of the all-solid secondary battery of Examples 1, 4, and 5. When charging and discharging proceed by the same C-rate (0.33 C) in FIG. 5, a ratio of the discharge specific capacity that appears when the $x^{th}$ cycle is discharged to the discharge specific capacity that appears when the first cycle is discharged is expressed as a percentage.

In a first cycle, the all-solid secondary battery 100 is charged at a constant current density of 0.33 C (2.05 mA/cm$^2$) until a battery voltage reaches 4.25 V, and a 4.25 V constant voltage is charged until the current reaches 0.1 C (0.62 mA/cm$^2$). Thereafter, discharge is performed at the constant current density of 0.33 C (2.05 mA/cm$^2$) until the battery voltage becomes 2.5 V. From the second cycle to the 50$^{th}$ cycle, charging and discharging are performed under the same conditions as in the first cycle.

The all-solid secondary battery 100 of Example 1 has a capacity retention of 90 % or more up to 50 times of charging and discharging. The all-solid secondary battery 100 of Example 4 has a capacity retention characteristic of 95 % or more up to 50 times of charging and discharging. The all-solid secondary battery 100 of Example 5 has a capacity retention characteristic of 90 % or more up to 50 times of charging and discharging.

As described herein, as the negative electrode active material layer 122 according to an embodiment includes the second particles 1222 composed of Cu, Ni, or Co, which are metallic materials that do not alloy with lithium metal together with the first particles 1221 of a carbon-based material, it can be seen that the capacity retention characteristic may be maintained at 90 % or more up to 50 times of charging and discharging.

Results of experiments have been described focusing on the all-solid-state secondary battery 20 in which the material of the solid electrolyte layer 130 is a sulfide-based solid electrolyte. However, the material of the solid electrolyte layer 130 of the all-solid-state secondary battery 20 is not limited thereto, and may vary.

Example 6

In Example 6, the all-solid-state secondary battery 100 is manufactured by the following process. Duplicate descriptions of the same contents as those of Examples 1-5 are omitted, and differences will be mainly described.

Manufacturing of positive electrode

$LiNi_{0.9}Co_{0.07}Mn0_{.03}O_2$ ("NCM") is prepared as a cathode active material. Moreover, carbon (Carbon black) is prepared as a conductive support agent. Then, these materials are mixed in a weight ratio of positive electrode active material: conductive support agent: binder = 97: 1.5: 1.5, and the mixture is molded in a sheet form on a current collector, and cut into a circle having a length of about 4 mm in diameter to prepare a positive electrode sheet.

Manufacturing of solid electrolyte layer

As a solid electrolyte of the solid electrolyte layer 130, lithium lanthanum zirconium oxide ("LLZO"), which is one of oxide-based solid electrolytes doped with tantalum (Ta), is used, and the LLZO is used a sample with a diameter of 14 mm and a thickness of 500 $\mu$m purchased from Toshima.

Manufacturing of negative electrode

A negative electrode is manufactured in the same manner as in Example 1 described herein.
Stainless steel ("SUS") is prepared as a negative electrode current collector. In the negative electrode active material layer 122, as a carbon-based material, the first particles 1221 including carbon black ("CB") having an average particle diameter D50 of about 80 nm and the second particle 1222 including copper in the form of nano powders having an average particle diameter of about 100 nm are prepared. A mixed powder obtained by mixing the first particles 1221 and the second particles 1222 at a weight ratio of about 3:1 is used. The carbon black is an amorphous carbon material.
The negative electrode 120 is prepared as follows. First, 4 g of a negative electrode active material in the form of a mixed powder is put into a container, and 20 g of an N-methyl-pyrrolidone ("NMP") solution including a polyvinylidene fluoride binder is added thereto. Subsequently, a negative electrode slurry is prepared by stirring the mixed solution while slowly adding the NMP solution to the mixed solution. The NMP solution is added until the viscosity of the negative electrode slurry becomes a state suitable for film formation by a blade coater. This negative electrode slurry is applied to a stainless steel foil using the blade coater, and is dried in air at 80 °C for 20 minutes. A stack thus obtained is further dried at 100 °C for 12 hours in a vacuum state.
The stack is molded into a sheet form including a mixture mixed in a weight ratio of carbon black: copper: binder = 70.1: 23.4: 6.5 and cut into a square having a length of about 20 mm to prepare a negative electrode sheet.

Manufacturing of secondary battery

After attaching a negative electrode to one side of a solid electrolyte layer, cold isostatic press ("CIP") is performed at a pressure of 2,500 bar for 3 minutes. Thereafter, after a stainless steel negative electrode current collector is removed from a negative electrode active material layer, a Li electrode having a diameter of 12 mm and a thickness of 20 $\mu$m is attached again on the negative electrode active material layer transferred on the solid electrolyte layer to perform CIP under the same conditions.
Then, a liquid electrolyte in which 5 microliters ($\mu$L) of 2 molar (M; moles per liter) lithium bis(fluorosulfonyl)imide (LiFSI) is dissolved in 1-butyl-1-methylpyrrolidinium bis(fluorosulfonyl)imide (PYR1, 3-FSI) is applied to the other side of a solid electrolyte layer, and the prepared positive electrode is attached to the liquid electrolyte to complete a cell.

Comparative Example 2

In Comparative Example 2, Ag is used instead of copper along with carbon black as an anode active material. As a carbon-based material, the first particle 1221 including carbon black ("CB") having an average particle diameter D50 of about 80 nm and the second particle 1222 including Ag in the form of nano powders having an average particle diameter of about 100 nm are prepared. A mixed powder obtained by mixing the first particles 1221 and the second particles 1222 at a weight ratio of about 3:1 is used. The carbon black is an amorphous carbon material.
An all-solid secondary battery is produced and tested in the same manner as in Example 1, except that this negative electrode active material is used.

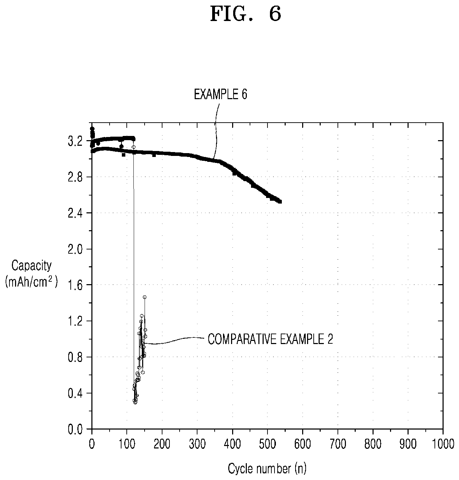

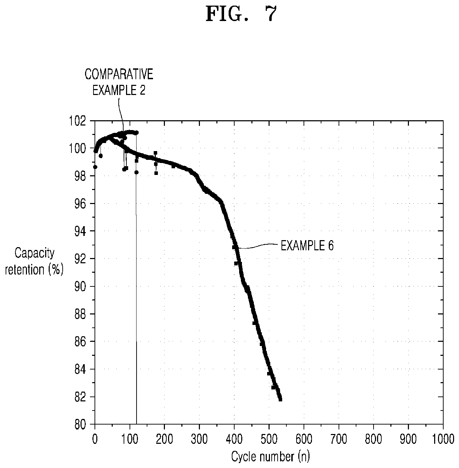

FIGS. 6 and 7 are graphs illustrating results of measuring cycle characteristics of the all-solid-state secondary battery 100 of Example 6 and Comparative Example 2. In FIG. 7, a ratio of the discharge specific capacity that appears when the $x^{th}$ cycle is discharged to the discharge specific capacity that appears when the first cycle is discharged is expressed as a percentage.
The all-solid-state secondary battery 100 of Example 6 has an average discharge capacity of 2.96 mAh/cm$^2$ during 534 charge/discharge cycles, an average coulombic efficiency is 99.87 %, and a capacity preservation characteristic is 81.78 % when the number of charge/discharge is 534 times.

On the other hand, an all-solid-state secondary battery of Comparative Example 2 has an average discharge capacity of 2.7 mAh/cm$^2$ during 152 charge/discharge cycles, an average coulombic efficiency is 83.62%, and a short circuit appears at 120 charge/discharge cycles.

Referring to charging and discharging test results of the all-solid-state secondary battery of Example 6 and Comparative Example 2, it can be seen that using a combination of carbon and copper as a material of a negative active material layer has better average discharge capacity and average coulombic efficiency than using a combination of carbon and silver, and a capacity retention characteristic is also significantly improved.

Although various details have been specifically described, they should not be construed as limiting the scope of the present disclosure, but rather should be construed as examples. For example, one of ordinary skill in the art will appreciate that the all-solid secondary battery 100 described with reference to FIGS. 1 to 7 and a method of charging the same may be modified in various ways. While one or more embodiments have been described with reference to the figures, it will be understood by those of ordinary skill in the art that various changes in form and details may be made therein without departing from the spirit and scope as defined by the following claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

**Claims**

1. An all-solid secondary battery comprising:

   a positive electrode comprising a positive electrode active material layer;
   a negative electrode comprising

   a negative electrode current collector, and
   a negative electrode active material layer on the negative electrode current collector; and

   a solid electrolyte layer between the positive electrode active material layer and the negative electrode active material layer,
   wherein the negative electrode active material layer comprises

   first particles comprising a carbon material, and
   second particles comprising a metallic material that does not alloy with lithium metal.

2. The all-solid secondary battery of claim 1,

   wherein a ratio of an initial charge capacity of the negative electrode active material layer to an initial charge capacity of the positive electrode active material layer satisfies Equation 1:

   Equation 1

   $$0.01 < (b / a) < 1$$

   wherein a is the initial charge capacity of the positive electrode active material layer determined from a first open circuit voltage to a maximum charging voltage versus Li/Li$^+$, and b is the initial charge capacity of the negative electrode active material layer determined from a second open circuit voltage to 0.01 volts versus Li/Li$^+$.

3. The all-solid secondary battery of claim 1, wherein the metallic material comprises at least one of copper, titanium, nickel, cobalt, boron, tungsten, iron, or an alloy thereof.

4. The all-solid secondary battery of claim 1,

   wherein an average particle diameter of the first particles is about 10 nanometers to about 1 micrometer, and

an average particle diameter of the second particles is about 5 nanometers to about 100 nanometers.

5. The all-solid secondary battery of claim 1, wherein a weight ratio of the metallic material to the carbon material is about 1:1 to about 1:20.

6. The all-solid secondary battery of claim 1, wherein the solid electrolyte layer comprises at least one of a sulfide solid electrolyte, an oxide solid electrolyte, or a polymer electrolyte.

7. The all-solid secondary battery of claim 6, wherein the solid electrolyte layer comprises a sulfide solid electrolyte, and the negative active material layer further comprises a metal sulfide.

8. The all-solid secondary battery of claim 7, wherein the metal sulfide comprises at least one of copper sulfide, titanium sulfide, cobalt sulfide, nickel sulfide, or zinc copper sulfide.

9. The all-solid secondary battery of claim 7, wherein a content of the metal sulfide is about 4 weight percent to about 50 weight percent, based on a total weight of the negative electrode active material layer.

10. The all-solid secondary battery of claim 1, wherein the solid electrolyte layer further comprises a binder or an ionic liquid.

11. The all-solid secondary battery of claim 1, wherein the negative active material layer further comprises a lithium-alloying metal or a lithium-alloying semiconductor material.

12. The all-solid secondary battery of claim 1, wherein the negative electrode active material layer further comprises a binder.

13. The all-solid secondary battery of claim 12, wherein a content of the binder is about 0.3 weight percent to about 15 weight percent, based on a total weight of the negative electrode active material layer.

14. The all-solid secondary battery of claim 1, wherein a thickness of the negative electrode active material layer is about 1 micrometer to about 20 micrometers.

15. The all-solid secondary battery of claim 1, wherein porosity of the negative electrode active material layer is about 30 % to about 60 %.

16. The all-solid secondary battery of claim 1, wherein the carbon material comprises at least one of carbon black, acetylene black, furnace black, Ketjen black, or graphene.

17. The all-solid secondary battery of claim 1, wherein, prior to a first charge or when the all-solid secondary battery is in a discharged state, the negative electrode current collector, the negative electrode active material layer, and an area between the negative electrode current collector and the negative electrode active material layer do not comprise lithium metal.

18. The all-solid secondary battery of claim 17, further comprising, when the all-solid secondary battery is in a charged state, a metal layer comprising lithium metal between the negative electrode current collector and the negative electrode active material layer.

19. The all-solid secondary battery of claim 2, wherein the ratio of the initial charge capacity of the negative electrode active material layer to the initial charge capacity of the positive electrode active material layer satisfies Equation 1A:

## Equation 1A

$$0.01 < (b / a) < 0.5 \quad .$$

20. The all-solid secondary battery of claim 19, herein the ratio of the initial charge capacity of the negative electrode active material layer to the initial charge capacity of the positive electrode active material layer satisfies Equation 1B:

$$0.01 < (b / a) < 0.1 \quad .$$

21. A method of charging an all-solid secondary battery, the method comprising:

   charging the all-solid secondary battery of claim 1 to a voltage such that
   an initial charge capacity of the negative electrode active material layer during charge of the all-solid secondary battery is exceeded.

22. The method of claim 21, further comprising, during the charge of the all-solid secondary battery, forming a metal layer comprising lithium metal between the negative electrode current collector and the negative electrode active material layer.

23. A method of operating the all-solid secondary battery of claim 1, the method comprising:

   charging the all-solid secondary battery,
   wherein prior to the charging of the all-solid secondary battery, the negative electrode current collector, the negative electrode active material layer, and an area between the negative electrode current collector and the negative electrode active material layer do not comprise lithium metal.

24. A method of operating the all-solid secondary battery of claim 1, the method comprising:

   charging the all-solid secondary battery; and
   discharging the all-solid secondary battery,
   wherein the negative electrode current collector, the negative electrode active material layer, and an area between the negative electrode current collector and the negative electrode active material layer do not comprise lithium metal after the discharging of the all-solid secondary battery.

25. A method of manufacturing an all-solid secondary battery, the method comprising:

   obtaining a positive electrode comprising a positive electrode active material layer;
   obtaining a negative electrode comprising

      a negative electrode current collector, and
      a negative electrode active material layer on the negative electrode current collector; and

   disposing a solid electrolyte layer between the positive electrode active material layer and the negative electrode active material layer,
   wherein the negative electrode active material layer comprises

      first particles comprising a carbon material, and
      second particles comprising a metallic material that does not alloy with lithium metal.

26. An all-solid secondary battery comprising:

   a positive electrode;
   a negative electrode comprising

      a carbon material, and
      a metallic material comprising at least one of copper, titanium, nickel, cobalt, or an alloy thereof; and

   a solid electrolyte layer between the positive electrode and the negative electrode, the solid electrolyte layer comprising at least one of a sulfide or an oxide,
   wherein a weight ratio of the metallic material to the carbon material is about 1:1 to about 1:20, and
   wherein a thickness of the negative electrode active material layer is about 1 micrometer to about 20 micrometers.

FIG. 1

FIG. 2

FIG. 3

FIG. 4

FIG. 5

FIG. 6

FIG. 7

## INTERNATIONAL SEARCH REPORT

| International application No. |
| --- |
| **PCT/KR2021/013251** |

**A. CLASSIFICATION OF SUBJECT MATTER**

**H01M 4/133**(2010.01)i; **H01M 4/587**(2010.01)i; **H01M 4/38**(2006.01)i; **H01M 4/62**(2006.01)i; **H01M 10/42**(2006.01)i; **H01M 10/44**(2006.01)i; **H01M 10/0562**(2010.01)i; **H01M 10/052**(2010.01)i; **H01M 4/04**(2006.01)i

According to International Patent Classification (IPC) or to both national classification and IPC

**B. FIELDS SEARCHED**

Minimum documentation searched (classification system followed by classification symbols)

H01M 4/133(2010.01); H01M 10/052(2010.01); H01M 10/42(2006.01); H01M 4/02(2006.01); H01M 4/134(2010.01); H01M 4/58(2010.01); H01M 4/64(2006.01); H01M 4/66(2006.01); H01M 4/88(2006.01); H01M 4/96(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 이차전지(all-solid secondary battery), 비정질 탄소(amorphous carbon), 구리(Cu, copper), 제1 입자(first particle), 제2 입자(secondary particle), 고체 전해질층(solid electrolyte layer)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2020-0078479 A (SAMSUNG ELECTRONICS CO., LTD.) 01 July 2020 (2020-07-01) See claims 1-6, 9, 15, 19, 20-22, 28, 30 and 31; paragraphs [0088], [0110], [0119], [0120], [0124], [0140], [0158]-[0174] and [0182]; figure 2; table 1; and example 1. | 1-26 |
| Y | JP 2008-300148 A (NISSAN MOTOR CO., LTD.) 11 December 2008 (2008-12-11) See claims 1-5 and 8-10; and paragraphs [0010], [0013], [0016], [0017], [0019]-[0022] and [0047]. | 1-26 |
| A | JP 2008-192364 A (MATSUSHITA ELECTRIC IND CO., LTD.) 21 August 2008 (2008-08-21) See entire document. | 1-26 |
| A | KR 10-1998-0006583 A (LG CHEM, LTD.) 30 March 1998 (1998-03-30) See entire document. | 1-26 |
| A | KR 10-2069826 B1 (LG CHEM, LTD.) 23 January 2020 (2020-01-23) See entire document. | 1-26 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **30 December 2021** | **31 December 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/013251**

| Patent document cited in search report | | | Publication date (day/month/year) | Patent family member(s) | | | Publication date (day/month/year) |
|---|---|---|---|---|---|---|---|
| KR | 10-2020-0078479 | A | 01 July 2020 | CN | 111656573 | A | 11 September 2020 |
| | | | | EP | 3714500 | A2 | 30 September 2020 |
| | | | | JP | 2019-096610 | A | 20 June 2019 |
| | | | | US | 10985407 | B2 | 20 April 2021 |
| | | | | US | 2019-0157723 | A1 | 23 May 2019 |
| | | | | US | 2021-0210791 | A1 | 08 July 2021 |
| | | | | WO | 2019-103470 | A2 | 31 May 2019 |
| | | | | WO | 2019-103470 | A3 | 15 August 2019 |
| JP | 2008-300148 | A | 11 December 2008 | None | | | |
| JP | 2008-192364 | A | 21 August 2008 | None | | | |
| KR | 10-1998-0006583 | A | 30 March 1998 | CN | 1265232 | A | 30 August 2000 |
| | | | | DE | 69817592 | T2 | 01 July 2004 |
| | | | | DK | 1016156 | T3 | 07 February 2005 |
| | | | | EP | 1016156 | A2 | 05 July 2000 |
| | | | | EP | 1016156 | B1 | 27 August 2003 |
| | | | | JP | 2002-507313 | A | 05 March 2002 |
| | | | | JP | 4113593 | B2 | 09 July 2008 |
| | | | | KR | 10-0368753 | B1 | 08 April 2003 |
| | | | | KR | 10-0368754 | B1 | 03 April 2003 |
| | | | | KR | 10-0380858 | B1 | 07 April 2003 |
| | | | | KR | 10-1999-0004383 | A | 15 January 1999 |
| | | | | KR | 10-1999-0004384 | A | 15 January 1999 |
| | | | | US | 2002-0168574 | A1 | 14 November 2002 |
| | | | | WO | 99-00001 | A2 | 07 January 1999 |
| | | | | WO | 99-00001 | A3 | 30 September 1999 |
| KR | 10-2069826 | B1 | 23 January 2020 | KR | 10-2017-0011357 | A | 02 February 2017 |

Form PCT/ISA/210 (patent family annex) (July 2019)